# EUROPEAN PATENT SPECIFICATION

(11) **EP 0 384 298 B1**
(45) Date of publication and mention of the grant of the patent: **20.07.1994**
(21) Application number: 90102968.6
(22) Date of filing: 15.02.1990
(51) Int. Cl.: G01N 21/76, G01J 1/44

(54) **Gas analyzer**
Vorrichtung zur Gasanalyse
Analyseur de gaz

(30) Priority: 23.02.1989 JP 20666/89 U
(43) Date of publication of application: 29.08.1990
(73) Proprietor: HORIBA, LTD., Minami-ku Kyoto (JP)
(72) Inventor: Noyama, Satoshi, Higashiyama-ku, Kyoto (JP); Imaki, Takao, Nagaokakyo-city, Kyoto (JP); Fujiwara, Masahiko, Shimamoto-cho, Mishima-gun (JP)
(74) Representative: TER MEER STEINMEISTER & PARTNER GbR

(56) References cited:
- EP-A- 0 209 295
- US-A- 4 220 412

## Description

### DETAILED DESCRIPTION OF THE INVENTION

### [Field of the Invention]

The present invention relates to a gas analyzer, for example to a chemical luminescence analyzer [hereinafter referred to as CLA).

### [Prior Art]

For example, a CLA is , by far, inexpensiver than a photomultiplier tube, superior in efficiency at normal temperature, and capable of being small-sized, so that a photo diode has been used as a light-measuring element in many cases.

However, in the case where weak light is measured by means of a photo diode, a problem has occurred in spike noises due to cosmic rays or α rays emitted from surrounding substances in addition to so-called thermal noises. These spike noises are intermittently emitted at a rate of several to several hundred times/hour to give a great influence upon an accurate measurement in a long-term continuous measurement, for example an error is produced in the results of measurement.

So, in order to eliminate the influence by the spike noises incidental to the above described photo diode, according to, for example, Japanese Utility Model Application Laid-Open No. Sho 61-195428, two photo diodes connected with each other in parallel are used for a sample to be measured, one of those two photo diodes being used for a signal, the other being used for comparison, and when there is a difference (being produced) between both photo diodes in output, an output signal of the photo diode for a signal being held.

### [Problems to be solved by the invention]

However, the gas analyzer according to the above described publication has exhibited disadvantages in that if the output signs of said two photo diodes are reduced, stationary noises are increased, so that it is impossible to detect the spike noises in an accuracy required for the analyzer.

So, in order to solve those disadvantages, Horiba, Ltd. has proposed in the Japanese Utility Model Application Laid-Open No. Hei 1-14282o that two photo diodes are disposed for a sample to be measured in parallel to each other so that a total sum of outputs of both photo diodes may be held when a difference occurs between both photo diodes in output.

This leads not only to an elemination of the influences through spike noises incidental to the photo diode but also to a remarkable improvement of S/N ratio, so that the highly accurate measurement is possible.

However, also in the improved art according to the above described Japanese Utility Model Application Laid-Open No. Hei 1-14282O ,problems still have been left in the same manner as in the said publication in that two photo diodes are necessary as the sensor and accordingly not only the circuit becomes complicated in construction but also a cooling element having a twofold capacity is required due to the requirement of cooling in particular the photo diodes themselves.

The present invention has been achieved paying attention to the above described matters and it is an object of the present invention to provide a gas analyzer capable of eliminating the influences through the spike noises incidental to the photo diode and remarkably improving the S/N ratio thereof to achieve a highly accurate measurement in spite of the simple and inexpensive construction.

### [Measures for solving the problems]

In order to achieve the above described object, according to the present invention, paying attention to the fact that frequency characteristics of the spike noises being almost flat at the respective frequencies, in one of the gas analyzer according to the present invention one photo diode is used as a detecting sensor, an output of said photo diode being supplied to a band pass filter and a high pass filter connected in parallel to each other, respectively, so that when an output of said high pass filter is equal or greater than a set value, an output of said band pass filter is sample held.

In addition, in the other of the gas analyzers according to the present invention one photo diode is used as a detecting sensor, an output of said photo diode being supplied to band pass filters connected with each other in parallel and having frequency characteristics different to each other, and the respective outputs of said band pass filters being leveled followed by taking a difference between the leveled outputs.

### [Operation]

According to the former construction, the output of the photo diode is supplied to the band pass filter and the high pass filter, respectively. When the spike noises are not contained in the output of the photo diode or being smaller than an appointed level even though they are contained in the output of the photo diode, the output of the band pass filter is taken in as a datum as it is. Furthermore, when the spike noises having a level larger than the appointed level which are contained in the output of the photo diode, the sample hold is carried out on the basis of the output from the high pass filter,thereby removing the spike noises from the output of the band pass filter.

According to the latter construction, the output of the photo diode is supplied into two band pass filters having frequency characteristics different to each other.Upon leveling the outputs of both band pass filters followed by taking the difference between said leveled outputs, the noise ingredients in the outputs of the respective band pass filters are compensated among themselves, whereby removing the spike noises

### [Effects of the Invention]

As above described, according to the present invention, not only a gas analyzer capable of remarkably improving a S/N ratio to conduct the highly accurate measurement can be simplified in construction but also the gas analyzer of this type can be inexpensively obtained.

### BRIEF DESCRIPTION OF THE DRAWINGS

Fig.1 is a block diagram showing a signal treatment of a gas analyzer according to a first preferred embodiment of the present invention;
Fig.2 is a block diagram showing a signal treatment of a gas analyzer according to a second preferred embodiment of the present invention;
Fig.3 is a diagram showing an output wave form at the respective portions to describe an operation of the first preferred embodiment; and
Fig.4, 5 are diagrams for describing an operation of the second preferred embodiment, in which Fig.4 is a diagram showing frequency characteristics of a signal ingredient and a band pass filter and Fig.5 is a diagram showing frequency characteristics of a noise ingredient and a band pass filter.

### DETAILED DESCRIPTION OF THE EMBODIMENT

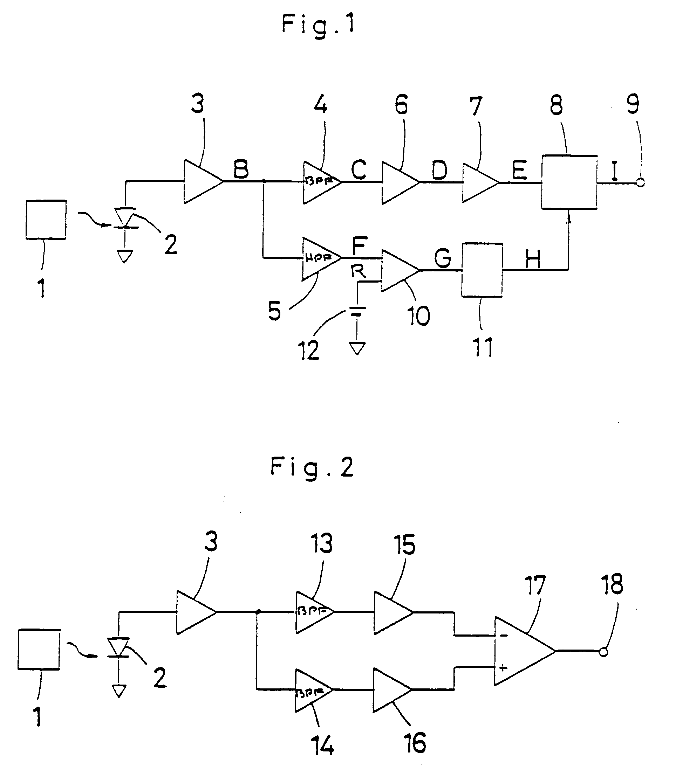

Fig.1 shows an example of a construction of a chopping type CLA according to the first preferred embodiment of the present invention. Referring to Fig. 1 reference numeral 1 designates a reaction cell adapted to receive, for example, a sample gas containing a NO gas to be measured and an ozone gas. Reference numeral 2 designates a photo diode installed in front of a cell window (not shown) of the reaction cell 1 for detecting light produced by a reaction between said ozone gas and said NO gas. Said photo diode 2 is, for example, a silicon diode. Reference numeral 3 designates a preamplifier for suitably amplifying an output of said photo diode 2 (this output is proportional to a concentration of the NO gas).

Reference numerals 4, 5 designate a band pass filter (hereinafter referred to as BPF) and a high pass filter (hereinafter referred to as HPF) disposed in parallel to each other on an output side of said preamplifier 3, respectively. A sample and hold circuit 8 is disposed on an output side of the BPF 4 through a rectifier circuit 6 and a leveling circuit 7, which are connected in series to each other. Reference numeral 9 designates an output terminal of said and sample hold circuit 8. In addition, a comparator 10 for comparing an output F of said HPF 5 with a comparator level R to supply an appointed comparator output G when said output F is larger than said comparator level R and a one-shot generating circuit 11 receiving said comparator output G to supply an appointed sample and hold instruction H are disposed on an output side of the HPF 5. Reference numeral 12 designates a standard power source providing said comparator level R.

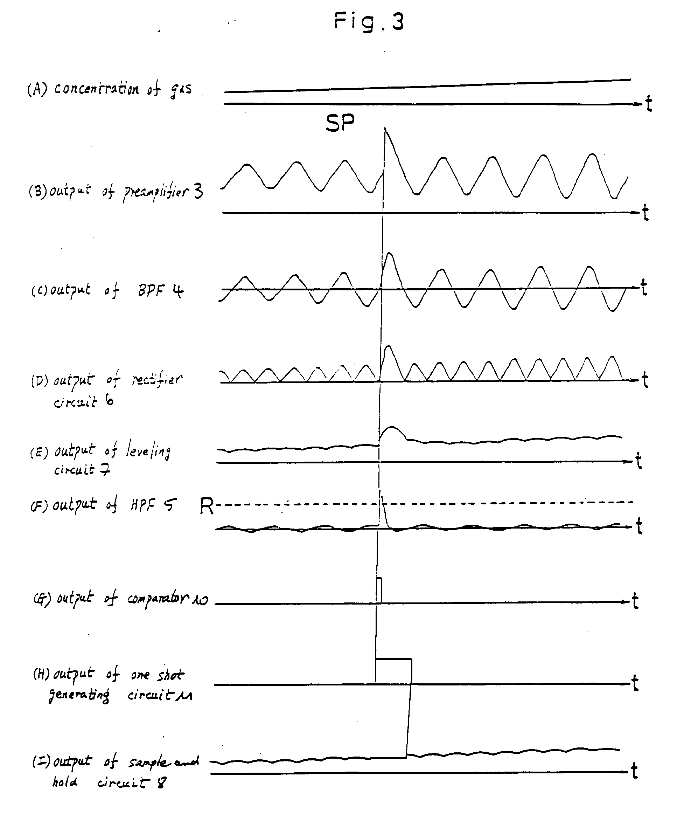

A signal treatment operation of the gas analyzer having the above described construction is described below with reference to Fig. 3 showing wave forms of output signals in the respective portions.
In the following it is assumed that the concentration of NO gas in the sample gas is changed as shown in Fig. 3 (A).

When introducing such sample gas into the reaction cell 1 together with an ozone gas, an appointed reaction makes progress within the reaction cell 1 to emit light having an intensity proportional to the concentration of the NO gas. This light is received by the photo diode 2 and a photo electric current emitted from this photo diode 2 is fed into the preamplifier 3 which generates output B as shown in Fig. 3 (B). It is assumed that the so-called "spike noises" (sp) as shown in Fig. 3 (B) are contained in this preamplifier output B.

Said preamplifier output B is supplied to the BPF 4 and the HPF 5, respectively. An output C, as shown in Fig. 3 (C), is generated by the filter 4, whereas an output F, as shown in Fig. 3(F) is generated by the filter 5.
The output C of the BPF 4 is rectified in the rectification circuit 6 and then leveled in the leveling circuit. After that the output from the leveling circuit 7 is supplied to the sample and hold circuit 8. In addition Figs. 3 (D), (E) show a rectification circuit output D and a leveling circuit E, respectively.

On the other hand, the output F of the HPF 5 is supplied to the comparator 10 to be compared with the comparator level R. At this time, when said output F is smaller than the comparator level R no output is generated by said comparator 10. Accordingly, the output from the BPF 4, which has been leveled in the above described manner, is continuously taken into the sample and hold circuit 8. However, when the spike noises (sp) are contained in said output F and this output F is larger than the comparator level R, the comparator output G, as shown in Fig. 3(G) is outputted from the comparator 10. This output G is supplied to the one-shot generating circuit 11 to generate the output H, as shown in Fig. 3 (H) at the output terminal thereof, whereby the appointed sample hold is conducted in the sample and hold circuit 8 and a flat output I, from which the spike noises (sp) have been removed, as shown in in Fig. 3(I), can be obtained at the output terminal 9 of said sample and hold circuit 8.

Next, Fig. 2 shows an example of the construction of a chopping type CLA according to the second preferred embodiment of the present invention. Referring to Fig. 2, reference numerals 13, 14 designate band pass filters (BPFs) having different frequency characteristics disposed in parallel to each other on an output side of a photo diode 2, reference numerals 15, 16 designate circuits for rectifying and leveling outputs of said BPFs 13, 14, reference numeral 17 designates a differential amplifier as a subtraction circuit for calculating a difference between outputs of said rectifying and leveling circuits 15,16, and reference numeral 18 designates an output terminal of said differential amplifier 17.

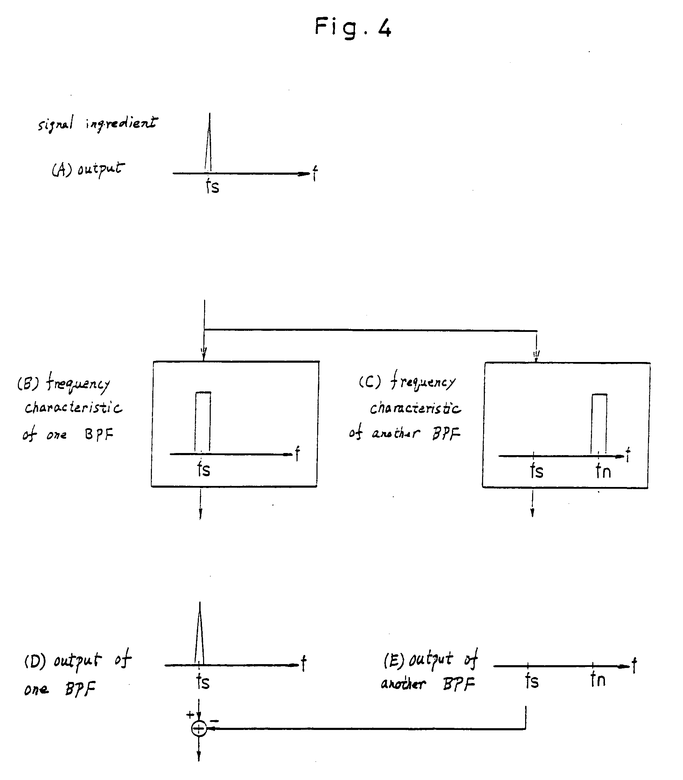

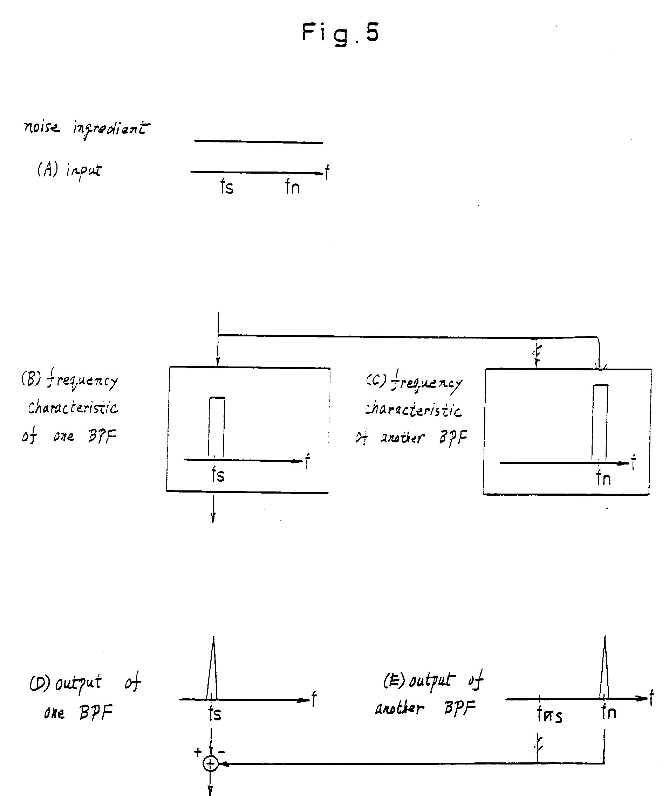

As to a signal treatment operation of a gas analyzer having the above described construction, frequency characteristics of signal ingredients and frequency characteristics of noise ingredients will be described below with reference to Fig. 4 and Fig. 5, respectively.

At first, as to the signal ingredients, provided in an output of the preamplifier 3, the signal ingredient output has a frequency characteristic, as shown in Fig. 4(A) and the BPFs 13, 14 have frequency characteristics, as shown in Fig. 4(B), (C) respectively.
Said signal ingredient output is supplied to the BPF 13 and BPF 14, respectively, to obtain an output as shown in Fig. 4(A) merely from one BPF 13 but not to obtain an output from the other BPF 14, as indicated in Fig. 4(D), (E), so that a signal ingredient output similar to that shown in Fig. 4 (A) is obtained from the differential amplifier 17.

On the other hand, as to the noise ingredients, provided in the output of the preamplifier 3, said noise ingredients have an output as shown in Fig, 5(A). Since the BPFs 13, 14 have the frequency characteristics as shown in Fig. 5(B) and Fig. 5(C), respectively, outputs having different frequencies are obtained from the respective BPFs 13, 14, as shown in Fig. 4(D), (E), whereby they are treated in the rectifying and leveling circuits 15, 16 so that a difference between them may be neglected followed by being compensated with each other in the differential amplifier 17.

In short, as understood from the above description and Figs. 4, 5, even though the spike noises are contained in the output of the photo diode 2, only the spike noises are removed and thus merely the signal ingredient is obtained.

The present invention is not limited by the above described two preferred embodiments, but it can be practiced in the form of various kinds of modification. For example, in the first preferred embodiment the output C of the BPF 4 may be subjected to the rectifying treatment and the leveling treatment at the same time.

Furthermore, the present invention can be applied also to CLAs other than the chopping type CLA and gas analyzers other than CLAs. That is to say, in the case where there is a sufficient difference (rise time) between the signal resulting from the change of the gas concentration and the change of the spike noises, it is possible to omit the BPF 4, the rectifying circuit 6 and the leveling circuit 7 in Fig. 1.

In addition, in both preferred embodiments the signal treatment may be conducted by means of a CPU.
That is to say, for example, in the first preferred embodiment the output of the preamplifier 3 is supplied to the CPU where the output is subjected to the appointed treatment. In this case, the sample and hold treatment is not conducted but an influence by the spike noises can be expected to subtract it. In such case, a smooth output wave form can be obtained even though the gas concentration is changed.

## Claims

1. A gas analyzer having a photo diode (2) used as a detecting sensor **characterised in that** an output of said photo diode (2) is supplied to a band pass filter (4) and a high pass filter (5) connected in parallel with each other such that when an output of said high pass filter (5) is equal or greater than a set value (R) an output of said band pass filter (4) is sample held.

2. A gas analyzer having a photo diode used as a detecting sensor, **characterised in that** an output of said photo diode (2) is supplied to band pass filters (13, 14) connected in parallel with each other and having frequency characteristics different to each other, leveling means (15, 16) are provided for leveling the respective outputs of said band pass filters (13, 14) and different generating means (17) are provided for generating the difference between said leveled outputs.

3. A gas analyzer as claimed in claim 1, **characterised in that** the sample hold operation regarding the output of said band pass filter (4) being actuated by a one-shot generating circuit (11) activated when the output of the high pass filter (5) reaches the set value (R), said one-shot generating circuit (11) being connected with its output terminal to a control terminal of a sample and hold circuit (8).

4. A gas analyzer as claimed in claaim 3, **characterized in that** a comparator (10) is provided having its first input connected to the output terminal of said high pass filter (5), its second input connected to a set value generating means (12) and its output connected to the one-shot generating circuit (11).

5. A gas analyzer as claimed in 3 and 14, **characterized in that** the duration of the sample hold operation corresponds to the duration of a control pulse transmitted from the one-shot generation circuit (11) to the control terminal of the sample and hold circuit (8).

## Patentansprüche

1. Vorrichtung zur Gasanalyse mit einer Photodiode (2), die als Meßsensor verwendet wird, **dadurch gekennzeichnet,** daß das Ausgangssignal der Photodiode (2) einem Bandpaßfilter (4) und einem Hochpaßfilter (5) zugeführt wird, die zueinander parallelgeschaltet sind, so daß dann, wenn das Ausgangssignal des Hochpaßfilters (5) gleich groß ist wie oder größer ist als ein vorgegebener Wert (R), das Ausgangssignal des Bandpaßfilters (4) abgetastet und gehalten wird.

2. Vorrichtung zur Gasanalyse mit einer Photodiode, die als Meßsensor verwendet wird, **dadurch gekennzeichnet,** daß das Ausgangssignal der Photodiode (2) parallelgeschalteten Bandpaßfiltern (13, 14) zugeführt wird, die voneinander verschiedene Frequenzcharakteristiken aufweisen, daß eine Potentialanpassungseinrichtung (15, 16) zur Potentialanpassung der jeweiligen Ausgangssignale der Bandpaßfilter (13, 14) vorhanden ist, und daß eine Differenzerzeugungseinrichtung (17) vorhanden ist, um die Differenz zwischen den im Potential angepaßten Ausgangssignalen zu erzeugen.

3. Vorrichtung zur Gasanalyse nach Anspruch 1**, dadurch gekennzeichnet,** daß der Abtast- und Haltevorgang betreffend das Ausgangssignal des Bandpaßfilters (4) durch eine Monoflopschaltung (11) ausgelöst wird, die dann aktiviert wird, wenn das Ausgangssignal des Hochpaßfilters (5) den vorgegebenen Wert (R) erreicht, wobei die Monoflopschaltung (11) mit ihrem Ausgangsanschluß an den Steueranschluß einer Abtast- und Halteschaltung (8) angeschlossen ist.

4. Vorrichtung zur Gasanalyse nach Anspruch 3, **dadurch gekennzeichnet,** daß ein Komparator (10) vorhanden ist, dessen erster Eingang mit dem Ausgangsanschluß des Hochpaßfilters (5) verbunden ist, dessen zweiter Eingang mit einer Erzeugungseinrichtung (12) für einen vorgegebenen Wert verbunden ist und dessen Ausgang mit der Monoflopschaltung (11) verbunden ist.

5. Vorrichtung zur Gasanalyse nach den Ansprüchen 3 und 4, **dadurch gekennzeichnet,** daß die Dauer des Abtast- und Haltevorgangs der Dauer eines von der Monoflopschaltung (11) an den Steueranschluß der Abtast- und Halteschaltung (8) übertragenen Steuerimpulses entspricht.

## Revendications

1. Un analyseur de gaz présentant une photodiode utilisée comme un capteur caractérisé en ce qu'un signal de sortie de ladite photodiode (2) est envoyé à un filtre passe-bande (4) et à un filtre passe-haut (5) reliés l'un à l'autre en parallèle de telle sorte que lorsqu'un signal de sortie dudit filtre passe-haut (5) est égal ou plus grand qu'une valeur de consigne (R) un signal de sortie dudit filtre passe-bande (4) soit échantillonné et maintenu bloqué.

2. Un analyseur de gaz présentant une photodiode utilisée comme capteur, caractérisé en ce qu'un signal de sortie de ladite photodiode (2) est envoyé à des filtres passe-bande (13, 14) reliés l'un à l'autre en parallèle et ayant des caractéristiques de fréquence différentes l'un de l'autre, en ce que des moyens de mise à niveau (15, 16) sont prévus pour niveler les sorties respectives desdits filtres passe-bande (13, 14) et différents moyens générateurs (17) sont prévus pour prendre la différence entre lesdits signaux de sortie nivelés.

3. Un analyseur de gaz selon la revendication 1, caractérisé en ce que l'opération d'échantillonnage et de maintien opérée sur le signal de sortie dudit filtre passe-bande (4) étant réalisée par un circuit générateur d'un signal non récurrent (11) est mise en oeuvre quand le signal de sortie du filtre passe-haut (5) atteint la valeur de consigne (5), ledit circuit générateur non récurrent (11) étant relié par sa borne terminale à la borne de commande du circuit échantillonneur bloquant (8).

4. Un analyseur de gaz selon la revendication 3, caractérisé en ce qu'un comparateur (10) est prévu, sa première borne d'entrée étant reliée à la borne de sortie dudit filtre passe-haut (5), sa seconde borne d'entrée étant reliée à des moyens (12) de génération de la valeur de consigne et sa borne de sortie étant reliée au circuit générateur d'un signal non récurrent (11).

5. Un analyseur de gaz selon les revendications 3 et 4, caractérisé en ce que la durée d'échantillonnage et de blocage d'échantillon corresponde à la durée d'une impulsion de commande transmise à partir du circuit d'un signal non récurrent générateur d'un signal non récurrent vers la borne de commande du circuit échantillonneur bloquant.
